# EUROPEAN PATENT APPLICATION

(11) **EP 3 995 202 A1**
(43) Date of publication of application: **11.05.2022**
(21) Application number: 20835529.7
(22) Date of filing: 29.06.2020
(51) Int. Cl.: B01D 47/10, B01D 36/04, B01D 53/34

(54) **ATMOSPHERIC SCRUBBER**

(30) Priority: 02.07.2019 ES 201900330 U
(71) Applicant: Depolluter S.L., 35002 Las Palmas de Gran Canaria (ES)
(72) Inventor: BOSCH WOOD, Daniel José, 35002 LAS PALMAS DE GRAN CANARIA (ES)
(74) Representative: Del Valle Valiente, Sonia
(86) International application number: PCT/ES2020/070416
(87) International publication number: WO 2021/001586

(57) **Abstract**

The invention relates to an electric device that can be installed on a column (2) and which comprises: air intake means (3, 4); air-filtering means (5); a washing mechanism with a system for circulating, by means of the Venturi effect, pressurised air mixed with a reactive fluid, preferably a hydrogen peroxide solution, in a circulation channel (6); the column (2), as a washing tower; and a bottom storage tank (14) in a base (21), where the dissolved pollutant is collected. Preferably, the device also comprises means for automatically controlling the level of collected pollutant by means of sensors (15, 15'); electronic operation control means comprising a microprocessor (16) and a communication module (17) for communicating with a remote telemanagement system; and means for the autonomous supply of energy by means of a photovoltaic solar panel (18) and an accumulator battery (20).

## Description

### OBJECT OF THE INVENTION

The invention, as stated in the title of the present specification, relates to an atmospheric scrubber that contributes advantages and features to the function intended, which are described in detail further on.

More particularly, the object of the invention focuses on an atmospheric air scrubber device the purpose of which is to provide a system to reduce the content of air pollutants in the urban environment, both at the level of particles and gases in solution, for which, preferably installed at the top of a column by way of a street lamp, it basically comprises: air intake means, air-filtering means, and a washing mechanism, by mixing air with a reactive, and dissolved pollutant collection; and, preferably, it also comprises means for automatically controlling the level of collected pollutant, means for the autonomous supply of energy, and electronic operation control means and means for communicating with a remote telemanagement system.

### FIELD OF APPLICATION OF THE INVENTION

The field of application of the present invention falls within the sector of the industry dedicated to the manufacture of devices, systems and apparatuses for scrubbing atmospheric air.

### BACKGROUND OF THE INVENTION

As is known, the increase in the concentration of harmful particles and polluting gases in the environment, especially in urban areas, primarily those with the highest concentration of vehicles and industrial activity, is a problem that is increasing year after year without the actions that are slowly being implemented entailing an effective solution, which makes the expansion thereof by all possible means necessary.

In this sense, the objective of the present invention is to provide a means to help solve, or at least minimise as much as possible, said problem by reducing said concentrations of particles and gases through the installation of air scrubbers which, incorporated in urban areas at adequate intervals, enable a practical and effective solution to be offered without implying a significant expense or energy consumption or any inconvenience for anyone, as it does not interfere with the normal activity or circulation of said areas as is the case with other more drastic solutions.

Moreover, and as a reference to the current state of the art, it should be noted that, although there are different types and models of air scrubber apparatuses on the market, at least on the part of the applicant, the existence of any other atmospheric scrubber, or any other invention of similar application, which exhibits technical, structural and constitutive features equal or similar to those presented by the one claimed herein is unknown.

### DESCRIPTION OF THE INVENTION

The atmospheric scrubber proposed by the invention is configured as the optimal solution to the aforementioned objective, the characterising details that make it possible and that distinguish it being conveniently included in the final claims that accompany this description.

Specifically, what the invention proposes, as noted above, is an air scrubber device that can be applied as a system to reduce the content of air pollutants in the urban environment, both at the level of particles and gases in solution, which, preferably intended to be installed with a column by way of a street lamp, essentially comprises air intake means, air-filtering means, and a washing mechanism that mixes air with a reactive and collects the dissolved pollutant; and furthermore, in the preferred embodiment, it also comprises means for controlling the level of collected pollutant, means for the autonomous supply of energy, and electronic operation control means and means for communicating with a remote telemanagement system.

More specifically, each of said means and mechanisms are made up of the following elements:
As air intake means, the device has an electric motor coupled to a cyclone fan made up of several suction rotors which, through the filtering means, take in air from the street or road wherein the scrubber has been installed and carry it accelerated and concentrated towards the washing mechanism arranged thereafter.

As air-filtering means, the device has intakes at the top portion thereof which, surrounding the aforementioned fan, comprise carbon filters and HEPA (High Efficiency Particulate Air) filters, wherein a first removal of macroparticles and microparticles from the air is produced prior to the inlet thereof into the scrubber.

As a washing mechanism, the scrubber comprises an ejector circulation channel through which the propelled air from the cyclone fan passes, wherein said propelled air is mixed with a reactive, preferably consisting of a hydrogen peroxide solution, which is nebulised by means of the Venturi effect in a mixing chamber located in said channel through nebulising holes. In turn, under said circulation channel, a washing tower has been provided which, made up of the column itself on which the aforementioned elements are incorporated, forms a receptacle the inside of which is filled with a plurality of elements made of plastic material that increases the contact surface between the liquid and the polluted air enabling a more intense washing phase and a longer reaction time for the removal of air pollutants. Finally, the mixture of liquid and polluted air is collected in a tray located in the bottom portion of the column that overflows towards a bottom product storage tank located in a housing provided for this purpose at the base of the column which, in turn, acts as a support for the fixing thereof and wherein there are drive pumps that cause the fluid to rise again to the top tank from where it is nebulised by means of the Venturi effect to the circulation channel.

In addition, the bottom fluid storage tank which, in turn, serves to collect the dissolved pollutants as the washing phases occur, is removable so that it can be periodically exchanged/replaced with a new one with clean reactive fluid.

For this reason, the means for automatically controlling the level of collected pollutant which the scrubber preferably comprises are formed by a concentration sensor which, located in the bottom tank for storing the hydrogen peroxide solution and pollutant, measures the degree of concentration of the product resulting from the combination of peroxide with nitrogen oxides conveyed by the polluted air, and another differential pressure sensor or sensors that define the degree of clogging of the particulate filters.

Moreover, as means for the autonomous supply of energy, the scrubber has a photovoltaic solar panel with permanent orientation, preferably through an orientation element on which the plate is located, and an energy accumulator system by means of a lithium ion ferrous phosphate battery.

In addition, as operation control means of the device, it has a small electronic control device with microprocessor, located next to the batteries in the upper portion of the scrubber, which provides a sequential and non-simultaneous operation system of the air intake means and the mechanism for driving the reactive towards the top tank.

Likewise, through said microprocessor by means of a communication system, the signal emitted by a pollutant level control sensor will indicate to a remote telemanagement system when maintenance and/or replacement of the hydrogen peroxide solution and the filters is required.

### DESCRIPTION OF THE DRAWINGS

To complement the description provided herein, and for the purpose of helping to make the features of the invention more readily understandable, said description is accompanied by a set of drawings constituting an integral part of the same, which by way of illustration and not limitation represents the following:

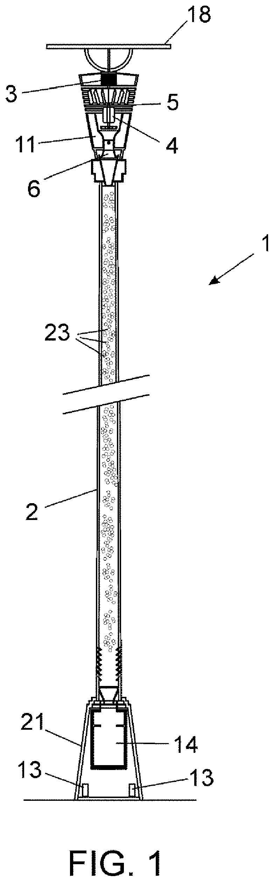

Figure 1 shows a schematic elevation and cross-sectional view of an exemplary embodiment of the atmospheric scrubber object of the invention, showing the general configuration and the main portions thereof.

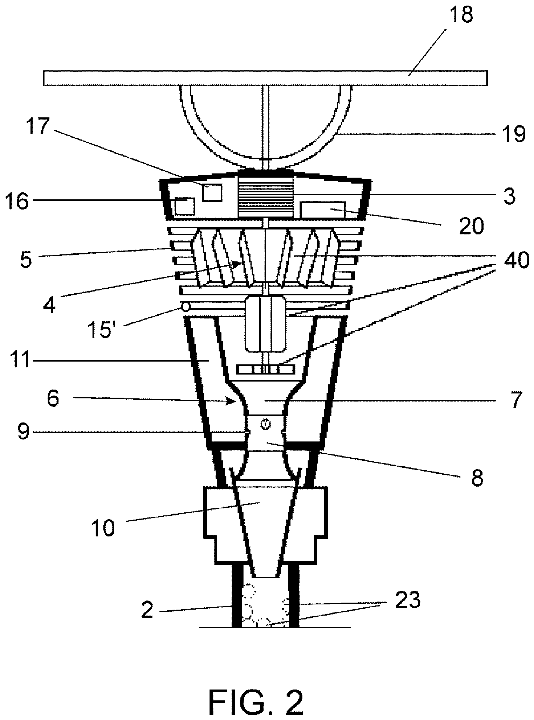

Figure 2 shows an enlarged view of the example of the scrubber of the invention shown in Figure 1, showing the elements of the same integrated in the top portion thereof, above the column, in greater detail.

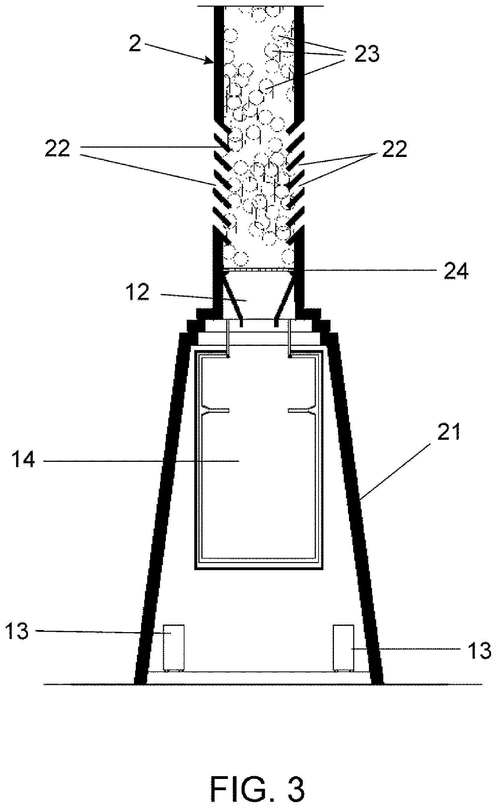

And Figure 3 shows an enlarged view of the bottom portion of the scrubber, according to the example shown in Figure 1, showing the elements that it comprises in said bottom portion, at the base of the column, in greater detail.

### PREFERRED EMBODIMENT OF THE INVENTION

In view of the aforementioned figures, and in accordance with the adopted numbering, one may observe therein a non-limiting example of the atmospheric scrubber disclosed, comprising what is described in detail below.

Thus, as can be seen in said figures, the scrubber (1) in question consists of an electrically driven device intended for being installed in a column (2) which essentially comprises:
- Air intake means defined by an electric motor (3) coupled to a cyclone fan (4), preferably made up of three different suction rotors (40), which take in air from the outside, around the rotors, and carry it accelerated and concentrated towards a washing mechanism arranged internally thereafter.
- Air-filtering means, consisting of intakes with filters (5) located in the top portion, surrounding the fan (4), comprising carbon filters and HEPA filters that retain macroparticles and microparticles from the air prior to the inlet thereof into the scrubber (1).
- A washing mechanism, located below the fan (4) which essentially comprises a system for circulating pressurised air through a narrow circulation channel (6) wherein, by means of the Venturi effect, it is mixed with a reactive fluid, preferably a hydrogen peroxide solution, and collects the dissolved pollutant.

Preferably, said mechanism comprises:
- a circulation channel (6), through which the air propelled from said fan (4) passes, being formed by a nozzle (7), a mixing chamber (8) with several nebulising holes (9) and an expansion chamber (10),
- a top tank (11), which surrounds the circulation channel (6) at the height of the mixing chamber (8) and communicates with the same through the nebulising holes (9),
- a washing tower, made up of the column (2) itself and the inside of which is filled with a plurality of elements made of plastic material (23),
- a bottom tray (12) located at the bottom portion of the washing tower of the column (2) that overflows towards a bottom product storage tank (14) located in a housing of the base (21) of the column, and that is removable,
- and one or two drive pumps (13), which cause the fluid to rise again to the top tank from where it is nebulised by means of the Venturi effect to the circulation channel.

It should also be noted that in order to prevent the elements made of plastic material (23) from falling from the bottom tray (12) to the bottom storage tank (14), a retaining grid or similar element (24) has been provided in the top portion thereof.

Lastly, a series of slots (22) have been made in the bottom portion of the column (2) to enable the scrubbed air to exit.

Furthermore, in a preferred embodiment, the scrubber (1) also comprises:
- Means for automatically controlling the level of collected pollutant, formed by a concentration sensor (15) located in the bottom storage tank (14) and which measures the degree of concentration of the resulting product subjected to washing in the mechanism described, and one or more differential pressure sensors (15') located in the filters (5), which define the degree of clogging thereof, which are activated by sending a signal when maintenance and/or replacement of the reactive fluid or the filters (5) is required.
- Electronic operation control means comprising a microprocessor (16), which provides a sequential and non-simultaneous operation mode of the air intake means and the mechanism for driving the reactive towards the top tank, and a communication module (17) for communicating with a remote telemanagement system, to send the signal emitted by the pollutant level control sensor (14).
- And means for the autonomous supply of energy made up of a photovoltaic solar panel (18) incorporated on an orientation element (19) and an energy accumulator system by means of a lithium ion ferrous phosphate battery (20). The microprocessor (16) and the communication module (17), as well as the battery (20), have been schematically represented in the figures.

With all this, the operation process of the scrubber (1) would be as follows:
Once the device is installed above the column (2) located on urban roads that require reduced pollutant emission levels and conveniently connected to the electricity supply system provided by the photovoltaic solar panel (18) and the battery (20), the air will enter inside the device through the particle filters (5) (carbon filter and HEPA filter) through the top portion thereof, mechanically suctioned.

The air is suctioned in from the outside by a mini cyclone fan (4) actuated by the electric motor (3) which drives it towards the circulation channel (6) wherein the narrowing thereof in the area of the nozzle (7) with a Venturi effect accelerates and pressurises it, thereby increasing the level of pollutant concentration.

Holes (9) are located in the mixing chamber (8) of said circulation channel (6) which enable the suction, also by means of the Venturi effect, of the reactive fluid, preferably consisting of a hydrogen peroxide solution, present in the top tank (11) surrounding said channel (6) and that will be nebulised and mixed with the air coming from outside that reaches said channel suctioned by the rotors of the fan (4). It is at this point when the chemical reaction between the hydrogen peroxide of the reactive concentration and the nitrogen oxides of the air to be decontaminated takes place.

In the expansion chamber (10), which is located at the end of the circulation channel (6) with the Venturi nozzle (7), the resulting fluid precipitates (a concentration of hydrogen peroxide with other compounds resulting from the process) towards the washing tower formed by the column (2) itself, wherein thanks to the elements made of plastic material (23), the contact surface between the liquid and the polluted air is increased, enabling a more intense washing phase and a longer reaction time for removing air pollutants.

The air, once scrubbed, will exit through the slots (22) made in the bottom portion of the column (2) and the fluid will fall, through the bottom tray (12), to the solution storage and collection tank (14).

The reactive fluid (the concentration of water and oxygen peroxide) is raised from the storage tank (14) by means of the pumps (13) back to the top tank (11), which is a temporary reactive storage tank located next to the mixing chamber (8) with the nebulising holes (9), to which they are connected by means of tubes and jets for suctioning reactive.

The entire system is controlled by the microprocessor (16) which manages its start-up, operating sequences and the data transmission process to facilitate maintenance of the same.

Having sufficiently described the nature of the present invention, as well as the ways of implementing it, it is not considered necessary to extend its explanation for any person skilled in the state of the art to understand its scope and the advantages which derive from it, stating that it may be implemented in other embodiments that differ in detail from that indicated by way of example provided the fundamentals are not modified.

## Claims

1. AN ATMOSPHERIC SCRUBBER **characterised in that** it consists of an electrically driven device suitable for being installed in a column (2) and comprising air intake means (3, 4), air-filtering means (5), and a washing mechanism for air which, in turn, comprises a system for circulating pressurised air through a narrow circulation channel (6) wherein, by means of the Venturi effect, it is mixed with a reactive fluid and means for collecting the dissolved pollutant.

2. THE ATMOSPHERIC SCRUBBER, according to claim 1, **characterised in that** the air intake means are defined by an electric motor (3) coupled to a cyclone fan (4), which take in air from the outside and carry it accelerated and concentrated towards the washing mechanism arranged internally thereafter.

3. THE ATMOSPHERIC SCRUBBER, according to claim 1 or 2, **characterised in that** the air-filtering means consist of intakes with filters (5) located in the top portion comprising carbon filters and HEPA filters that retain macroparticles from the air prior to the inlet thereof into the scrubber (1).

4. THE ATMOSPHERIC SCRUBBER, according to any of claims 1 to 3, **characterised in that** the washing mechanism comprises: a circulation channel (6), through which the propelled air passes, being formed by a Venturi effect nozzle (7), a mixing chamber (8) with several nebulising holes (9) and an expansion chamber (10); a top tank (11), which surrounds the circulation channel (6) at the height of the mixing chamber (8) and communicates with the same through the nebulising holes (9); a washing tower, made up of the column (2) itself and the inside of which is filled with a plurality of elements made of plastic material (23), a bottom tray (12) located under the washing tower of the column (2); a bottom product storage tank (14) located below the bottom tray (12) in a housing of the base (21) of the column; and one or two drive pumps (13), which cause the fluid to rise again to the top tank (11) from where it is nebulised by means of the Venturi effect to the circulation channel.

5. THE ATMOSPHERIC SCRUBBER, according to claim 4, **characterised in that** the bottom fluid storage tank (14) is removable.

6. THE ATMOSPHERIC SCRUBBER, according to any of claims 1 to 5, **characterised in that** the reactive fluid is preferably a hydrogen peroxide solution.

7. THE ATMOSPHERIC SCRUBBER, according to any of claims 1 to 6, **characterised in that** it comprises means for automatically controlling the level of collected pollutant.

8. THE ATMOSPHERIC SCRUBBER, according to claim 7, **characterised in that** it comprises, as means for automatically controlling the level of collected pollutant, a concentration sensor (15) located in the bottom storage tank (14).

9. THE ATMOSPHERIC SCRUBBER, according to claim 7 or 8, **characterised in that** it comprises, as means for automatically controlling the level of collected pollutant, one or more differential pressure sensors (15') located in the filters (5).

10. THE ATMOSPHERIC SCRUBBER, according to any of claims 1 to 9, **characterised in that** it comprises electronic operation control means comprising a microprocessor (16) and a communication module (17) for communicating with a remote telemanagement system.

11. THE ATMOSPHERIC SCRUBBER, according to any of claims 1 to 10, **characterised in that** it comprises means for the autonomous supply of energy.

12. THE ATMOSPHERIC SCRUBBER, according to claim 10, **characterised in that** it comprises, as means for the autonomous supply of energy, a photovoltaic solar panel (18) incorporated on an orientation element (19) and an energy accumulator system by means of a battery (20).

## Amended claims

### Amended claims under Art. 19.1 PCT

1. AN ATMOSPHERIC SCRUBBER **characterised in that** it consists of an electrically driven device suitable for being installed in a column (2) and comprising air intake means (3, 4), air-filtering means (5), and a washing mechanism for air which, in turn, comprises a system for circulating pressurised air through a narrow circulation channel (6) wherein, by means of the Venturi effect, it is mixed with a reactive fluid and means for collecting the dissolved pollutant; wherein the air intake means are defined by an electric motor (3) coupled to a cyclone fan (4), which take in air from the outside and carry it accelerated and concentrated towards the washing mechanism arranged internally thereafter; the air-filtering means consist of intakes with filters (5) located in the top portion comprising carbon filters and HEPA filters that retain macroparticles from the air prior to the inlet thereof into the scrubber (1); and wherein the washing mechanism comprises: a circulation channel (6), through which the propelled air passes, being formed by a Venturi effect nozzle (7), a mixing chamber (8) with several nebulising holes (9) and an expansion chamber (10); a top tank (11), which surrounds the circulation channel (6) at the height of the mixing chamber (8) and communicates with the same through the nebulising holes (9); a washing tower, made up of the column (2) itself and the inside of which is filled with a plurality of elements made of plastic material (23), a bottom tray (12) located under the washing tower of the column (2); a bottom product storage tank (14) located below the bottom tray (12) in a housing of the base (21) of the column; and one or two drive pumps (13), which cause the fluid to rise again to the top tank (11) from where it is nebulised by means of the Venturi effect to the circulation channel.

2. THE ATMOSPHERIC SCRUBBER, according to claim 1, **characterised in that** the bottom fluid storage tank (14) is removable.

3. THE ATMOSPHERIC SCRUBBER, according to any of claims 1 or 2, **characterised in that** the reactive fluid is preferably a hydrogen peroxide solution.

4. THE ATMOSPHERIC SCRUBBER, according to any of claims 1 to 3, **characterised in that** it comprises means for automatically controlling the level of collected pollutant.

5. THE ATMOSPHERIC SCRUBBER, according to claim 4, **characterised in that** it comprises, as means for automatically controlling the level of collected pollutant, a concentration sensor (15) located in the bottom storage tank (14).

6. THE ATMOSPHERIC SCRUBBER, according to claim 4 or 5, **characterised in that** it comprises, as means for automatically controlling the level of collected pollutant, one or more differential pressure sensors (15') located in the filters (5).

7. THE ATMOSPHERIC SCRUBBER, according to any of claims 1 to 6, **characterised in that** it comprises electronic operation control means comprising a microprocessor (16) and a communication module (17) for communicating with a remote telemanagement system.

8. THE ATMOSPHERIC SCRUBBER, according to any of claims 1 to 7, **characterised in that** it comprises means for the autonomous supply of energy.

9. THE ATMOSPHERIC SCRUBBER, according to claim 8, **characterised in that** it comprises, as means for the autonomous supply of energy, a photovoltaic solar panel (18) incorporated on an orientation element (19) and an energy accumulator system by means of a battery (20).
